# EUROPEAN PATENT SPECIFICATION

(11) **EP 4 403 895 B1**
(45) Date of publication and mention of the grant of the patent: **04.06.2025**
(21) Application number: 24152333.1
(22) Date of filing: 17.01.2024
(51) Int. Cl.: G01L 15/00, G01L 19/00, G01L 19/14, G01L 27/00, G01L 9/06

(54) **SPLIT-STACKED FULL-BRIDGE PRESSURE SENSOR**
VOLLBRÜCKENDRUCKSENSOR MIT GETEILTER STAPELUNG
CAPTEUR DE PRESSION EN PONT COMPLET EMPILÉ EN DEUX PARTIES

(30) Priority: 18.01.2023 US 202318155836
(43) Date of publication of application: 24.07.2024
(73) Proprietor: TE Connectivity Solutions GmbH, 8200 Schaffhausen (CH)
(72) Inventor: Nambisan, Ramprasad Mohanan, Fremont, CA 94555 (US); Drljaca, Predrag, 8200 Schaffhausen (CH)
(74) Representative: Ashton, Gareth Mark

(56) References cited:
- EP-A1- 3 982 097
- EP-A2- 2 112 488
- EP-A2- 3 196 618
- US-B1- 8 171 800

## Description

The present invention relates to a sensor and, more particularly, to a sensor assembly including a full-bridge pressure sensor.

A pressure sensor commonly includes a sensor diaphragm and piezoresistors disposed on the sensor diaphragm. An applied force or pressure deflects the sensor diaphragm, which changes the resistance of the piezoresistors on the diaphragm, correspondingly changing a measured output of the pressure sensor that reflects the force or pressure.

A full-bridge pressure sensor is used to increase the accuracy and reliability of the sensor measurements. The full-bridge sensor, however, requires a sensor diaphragm sized to accommodate four piezoresistors to form the full Wheatstone bridge, which increases the necessary size of the pressure sensor. Current solutions cannot provide the accuracy and performance of a full-bridge sensor in applications, such as medical applications, that have significant size restrictions.

US 8171800 discloses a sensor assembly element having a substrate. First and second dies are attached to respective first and second outer surfaces of the substrate and each die comprises a diaphragm. The sensor assembly has a full-bridge pressure sensor including a plurality of piezoresistive elements disposed into the first diaphragm of the first die.

EP 3196618 discloses a pseudo differential pressure sensor having a Wheatstone bridge comprising a first subset of piezoresistors arranged on a first diaphragm of a first absolute pressure sensor and a second subset of piezoresistors arranged on a second diaphragm of a second absolute pressure sensor.

EP3982097 discloses a pressure sensing element mounted on a substrate wherein the pressure sensing element has a diaphragm on a pair of supports.

EP2112488 discloses a pressure sensor having a substrate and a diaphragm wherein the diaphragm has pressure-sensitive elements. An integrated circuit is electrically connected to the pressure sensor.

According to the present invention, there is provided a sensor assembly as claimed in claim 1.

The invention will now be described by way of example with reference to the accompanying Figures, of which:
Figure 1 is a schematic diagram of a sensor assembly according to an arrangement included for background information;
Figure 2 is a schematic diagram of a sensor assembly according to another arrangement included for background information;
Figure 3 is a schematic diagram of a sensor assembly according to another embodiment;
Figure 4 is a schematic diagram of a sensor assembly according to another embodiment;
Figure 5 is a schematic diagram of a sensor assembly according to another embodiment; and
Figure 6 is a schematic diagram of a sensor assembly according to another embodiment.

Arrangements and exemplary embodiments of the present disclosure will be described hereinafter in detail with reference to the attached drawings, wherein like reference numerals refer to like elements. The present disclosure may, however, be embodied in many different forms and should not be construed as being limited to the arrangements and embodiments set forth herein; rather, these arrangements and embodiments are provided so that the present disclosure will convey the concept of the disclosure to those skilled in the art. In addition, in the following detailed description, for purposes of explanation, numerous specific details are set forth to provide a thorough understanding of the disclosed arrangements and embodiments. However, it is apparent that one or more embodiments may also be implemented without these specific details.

Throughout the drawings, only one of a plurality of identical elements may be labeled in a figure for clarity of the drawings, but the detailed description of the element herein applies equally to each of the identically appearing elements in the figure. Directional descriptors used in the specification are merely for clarity of the description and for differentiation of the various directions. These directional descriptors do not imply or require any particular orientation of the disclosed elements.

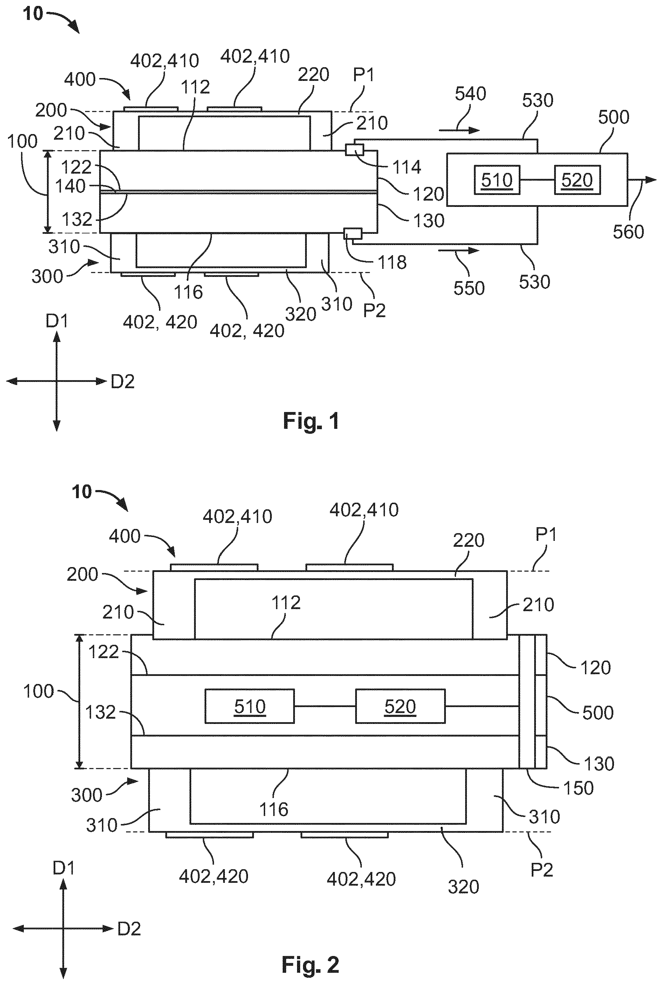

A sensor assembly 10 according to an arrangement is shown in Figure 1. The sensor assembly 10 includes a substrate 100, a first die 200 attached to the substrate 100, a second die 300 attached to the substrate 100, a full-bridge pressure sensor 400 disposed on the first die 200 and the second die 300, and an integrated circuit 500 connected to the full-bridge pressure sensor 400.

The substrate 100 has a first outer surface 112 and a second outer surface 116 opposite the first outer surface 112 in a first direction D1, shown in Figure 1. The substrate 100 may be a silicon material, a glass material, a sapphire material, or any other type of material used in piezoresistive sensor substrates.

In the arrangement shown in Figure 1, the substrate 100 includes a first portion 120 and a second portion 130 formed separately from one another and bonded together at a bond 140. The first portion 120 and the second portion 130 are each formed of the material of the substrate 100. The first portion 120 has the first outer surface 112 and a first inner surface 122 opposite the first outer surface 112 in the first direction D1. The second portion 130 has the second outer surface 116 and a second inner surface 132 opposite the second outer surface 116 in the first direction D1. The first inner surface 122 is bonded to the second inner surface 132 by the bond 140, which may be a fusion bond, an epoxy bond, an anodic bond, a eutectic bond, or any other type of bond that can attach the first portion 120 to the second portion 130. In some embodiments, the bond 140 may be electrically conductive and form an electrical connection. In another embodiment, the substrate 100 can be formed monolithically in a single piece with the first outer surface 112 and the second outer surface 116.

As shown in the arangement of Figure 1, the substrate 100 has a first contact 114 on the first outer surface 112 and a second contact 118 on the second outer surface 116. The first contact 114 and the second contact 118 may be formed of any conductive material, such as gold or copper, that permits an external electrical connection.

The first die 200, as shown in Figure 1, has a pair of first supports 210 and a first diaphragm 220 extending between the first supports 210. The first diaphragm 220 is deflectable with respect to the first supports 210. The first die 200 is formed of a silicon material. In an embodiment, the first die 200 is monolithically formed in a single piece with the first supports 210 and the first diaphragm 220, and the silicon material of the first die 220 is etched to form the first diaphragm 220. In another embodiment, the first diaphragm 220 is formed separately from the first supports 210 and is attached to the first supports 210.

The second die 300, as shown in Figure 1, has a pair of second supports 310 and a second diaphragm 320 extending between the second supports 310. The second diaphragm 320 is deflectable with respect to the second supports 310. The second die 300 is formed of a silicon material. In an embodiment, the second die 300 is monolithically formed in a single piece with the second supports 310 and the second diaphragm 320, and the silicon material of the second die 300 is etched to form the second diaphragm 320. In another embodiment, the second diaphragm 320 is formed separately from the second supports 310 and is attached to the second supports 310. In an embodiment, the first die 200 and the second die 300 are identical.

The full-bridge pressure sensor 400, as shown in Figure 1, includes a plurality of piezoresistive elements 402 disposed on the first die 200 and the second die 300. The piezoresistive elements 402 include a first subset 410 of at least two of the piezoresistive elements 402 disposed on the first diaphragm 220 and a second subset 420 of at least two of the piezoresistive elements 402 disposed on the second diaphragm 320. The piezoresistive elements 402 are an elemental material that is patterned over or embedded into the silicon material of the first die 200 and the second die 300; the piezoresistive elements 402 can be positioned on a surface of or within the diaphragms 220, 320. In an embodiment, the elemental material is a positive dopant, such as p-type boron, but could be any type of material used to create a piezoresistor in a silicon material.

The full-bridge pressure sensor 400 includes four piezoresistive elements 402 in the shown embodiment that form a full Wheatstone bridge. In this embodiment, the first subset 410 is a first half-bridge that includes two piezoresistive elements 402 on the first diaphragm 220 and the second subset 420 is a second half-bridge that includes another two piezoresistive elements 402 on the second diaphragm 320, as shown in Figure 1.

As shown in Figure 1, the integrated circuit 500 has a processor 510 and a memory 520 connected to the processor 510. The memory 520 is a non-transitory computer-readable medium storing algorithms that, when executed by the processor 510, perform the functions of the integrated circuit 500 described herein. The integrated circuit 500 can be any kind of application-specific integrated circuit (ASIC) or application-specific standard product (ASSP) chip that is capable of being used in piezoresitive sensor applications as described herein.

In the sensor assembly 10 shown in Figure 1, the first die 200 is attached to the first outer surface 112 and the second die 300 is attached to the second outer surface 116. The first supports 310 of the first die 200 are bonded to the first outer surface 112, for example by fusion bonding, anodic bonding, thermal compression, or solder, and separate the first diaphragm 220 from the first outer surface 112 in the first direction D1. The first diaphragm 220 with the first subset 410 of the piezoresistive elements 402 is deflectable toward the first outer surface 112 in the first direction D1. The second supports 310 of the second die 300 are bonded to the second outer surface 116, for example by fusion bonding, anodic bonding, thermal compression, or solder, and separate the second diaphragm 320 from the second outer surface 116 in the first direction D1. The second diaphragm 320 with the second subset 420 of piezoresistive elements 402 is deflectable toward the second outer surface 116 in the first direction D1.

In the shown arrangement, the first subset 410 of piezoresistive elements 402 are disposed on a side of the first diaphragm 220 facing away from the first outer surface 112 in the first direction D1 and the second subset 420 of piezoresistive elements 402 are disposed on a side of the second diaphragm 320 facing away from the second outer surface 116 in the first direction D1. In another embodiment, the first subset 410 may be disposed on a side of the first diaphragm 220 facing the first outer surface 112 and/or the second subset 420 may be disposed on a side of the second diaphragm 320 facing the second outer surface 116. In another embodiment, the first subset 410 can be embedded within the first diaphragm 220 and/or the second subset 420 can be embedded within the second diaphragm 320. In another embodiment, the first contact 114 can alternatively be positioned on the first diaphragm 220 and the second contact 118 can be positioned on the second diaphragm 320.

The first subset 410 on the first diaphragm 220 lies in a first plane P1 normal to the first direction D1 and parallel to the first outer surface 112, and the second subset 420 on the second diaphragm 320 lies in a second plane P2 normal to the first direction D1 and parallel to the second outer surface 116. As shown in Figure 1, the first plane P1 is separated from the second plane P2 in the first direction D1. In the arrangement of the sensor assembly 10 shown in Figure 1, the first die 200 with the first subset 410 and the second die 300 with the second subset 420 are mirror symmetrical about the substrate 100.

The integrated circuit 500, as shown in Figure 1, has a pair of electrical leads 530 connected to the first contact 114 and the second contact 118. The integrated circuit 500 is electrically connected to the piezoresistive elements 402 of the first subset 410 and the second subset 420 through the contacts 114, 118. In the arrangement shown in Figure 1, the integrated circuit 500 is external to and spaced apart from the substrate 100, the first die 200, and the second die 300.

In use of the sensor assembly 10 to measure a force or pressure, the pressure causes deflection of the first diaphragm 220 and the second diaphragm 320, which changes a resistance of the first subset 410 and the second subset 420 of the piezoresistive elements 402 forming the full-bridge pressure sensor 400. The first subset 410 or first half-bridge is electrically connected to the first contact 114 and a first signal 540 representing the change in resistance of the first subset 410 that corresponds to the pressure measured by the first subset 410 is transmitted to the integrated circuit 500 through the first contact 114 and one of the electrical leads 530. The second subset 420 or second half-bridge is electrically connected to the second contact 118 and a second signal 550 representing the same applied pressure is transmitted to the integrated circuit 500 through the second contact 118 and one of the electrical leads 530.

Even though the first subset 410 and the second subset 420 act as a full-bridge sensor 400 to measure the same pressure applied to the sensor assembly 10, because the first subset 410 and the second subset 420 are positioned in the planes P1, P2 spaced apart from one another, the first signal 540 and the second signal 550 may have some difference due to positional variations in the applied pressure. The integrated circuit 500 has a calibration algorithm stored on the memory 520 that, when executed by the processor 510, corrects a signal error between the first signal 540 and the second signal 550. The processor 510 retrieves a calibrated value stored in the memory 520 based on known temperature and pressure and compares it to the signals 540, 550 to generate the correct compensation for the signal error. The integrated circuit 500 combines the first signal 540 and the second signal 550 to output a measured pressure 560 applied to the sensor assembly 10 and measured by the full bridge pressure sensor 400.

Another arrangement and exemplary embodiments of the sensor assembly 10 are shown in Figures 2-6. Like reference numbers refer to like elements with respect to the embodiment of the sensor assembly 10 shown in Figure 1, and primarily the differences of the arrangements and embodiments in Figures 2-6 will be described in detail.

In the sensor assembly 10 shown in Figure 2, the integrated circuit 500 is positioned or interposed between the first portion 120 and the second portion 130 of the substrate 100. The first inner surface 122 of the first portion 120 is attached or bonded to a first side of the integrated circuit 500 and the second inner surface 132 is attached or bonded to a second side of the integrated circuit 500 opposite the first side in the first direction D1.

In the arrangement shown in Figure 2, instead of the contacts 114, 118 in the embodiment of Figure 1, the integrated circuit 500 disposed between the portions 120, 130 of the substrate 110 is electrically connected to the first subset 410 and the second subset 420 of the full-bridge pressure sensor 400 by a via 150. The via 150 extends from the first outer surface 112 to the second outer surface 116 of the substrate 100, through the first portion 120, the integrated circuit 500, and the second portion 130. In an embodiment, the via 150 is a passageway through the portions 120, 130 and the integrated circuit 500 that is plated with an electrically conductive material, such as copper.

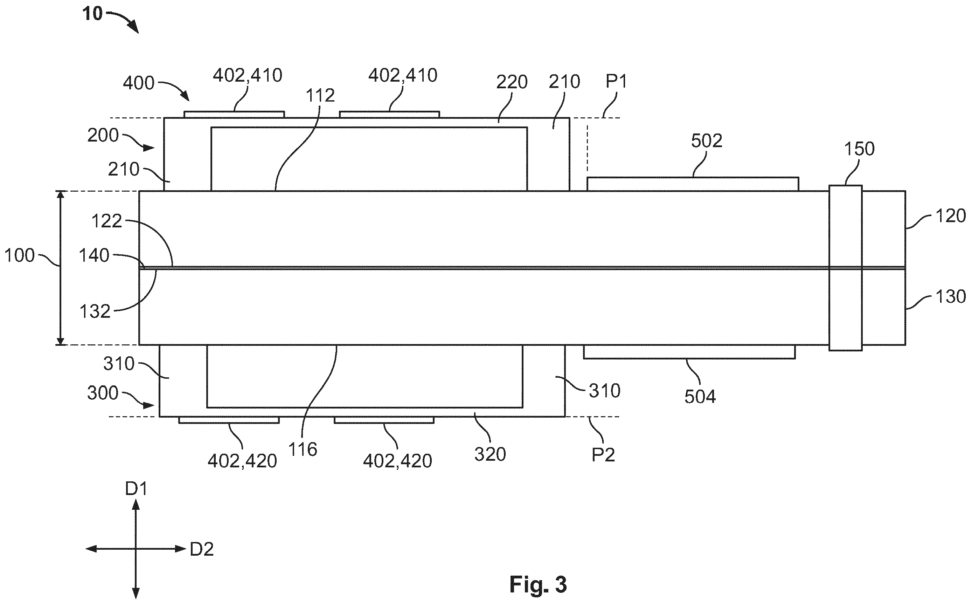

In the embodiments shown in Figures 3-6, the sensor assembly 10 includes a first integrated circuit 502 and a second integrated circuit 504 that each include the components of the integrated circuit 500 described above. The first integrated circuit 502 is disposed on the first outer surface 112 adjacent to the first die 200 and the second integrated circuit 504 is disposed on the second outer surface 116 adjacent to the second die 300. The first integrated circuit 502 is connected to the first subset 410 and processes the signal from the first subset 410 while the second integrated circuit 504 is connected to the second subset 420 and processes the signal from the second subset 420. The integrated circuits 502, 504 are further connected to one another, with either or both of the integrated circuits 502, 504 capable of performing the aforementioned correction of signal error and outputting of the measured pressure 560 sensed by the full-bridge pressure sensor 400. In another embodiment, the sensor assembly 10 can include one of the first integrated circuit 502 disposed on the first outer surface 112 or the second integrated circuit 504 disposed on the second outer surface 116.

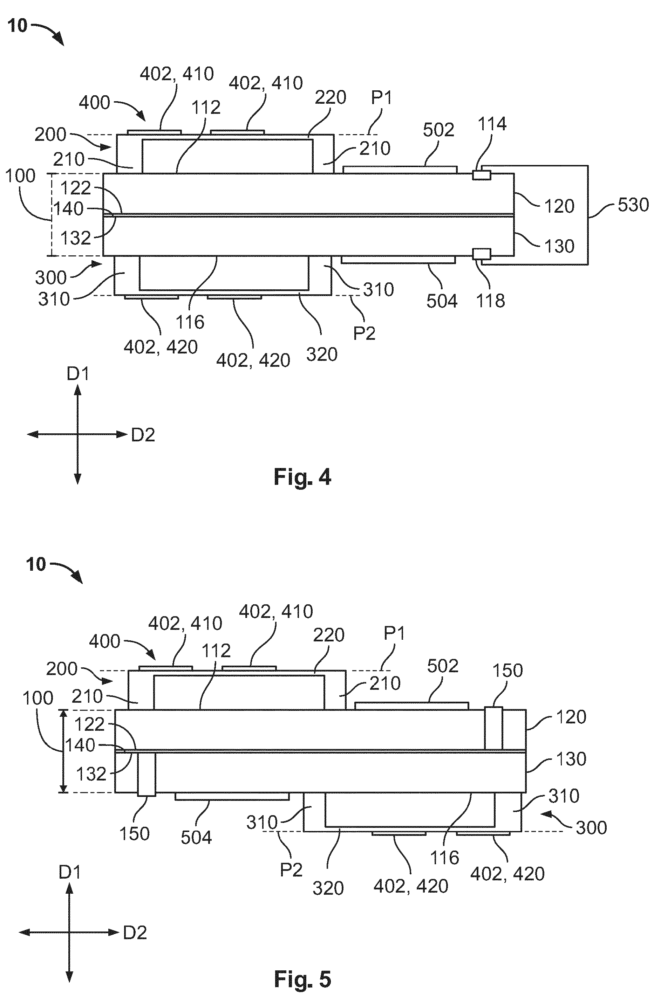

In the embodiments shown in Figures 3 and 4, the dies 200, 300 and the integrated circuits 502, 504 are positioned mirror symmetrical about the substrate 100. In another embodiment shown in Figure 5, the dies 200, 300 and the integrated circuits 502, 504 are offset from one another in a second direction D2 perpendicular to the first direction D1 and parallel to the first outer surface 112 and the second outer surface 116.

In the embodiments of Figures 3 and 5, the piezoresistive elements 402 of the full-bridge pressure sensor 400 and the integrated circuits 502, 504 are electrically connected by the via 150. The via 150 can extend straight through the portions 120, 130 of the substrate 100 in the first direction D1, as shown in Figure 3, or can have different sections in the portions 120, 130 that are electrically connected and offset from one another in the second direction D2, as shown in Figure 5. In the embodiment of Figure 4, the piezoresistive elements 402 of the full-bridge pressure sensor 400 and the integrated circuits 502, 504 are electrically connected by external electrical leads 530 connecting contacts 114, 118 on the outer surfaces 112, 116 of the substrate 100, as similarly described with respect to Figure 1 above.

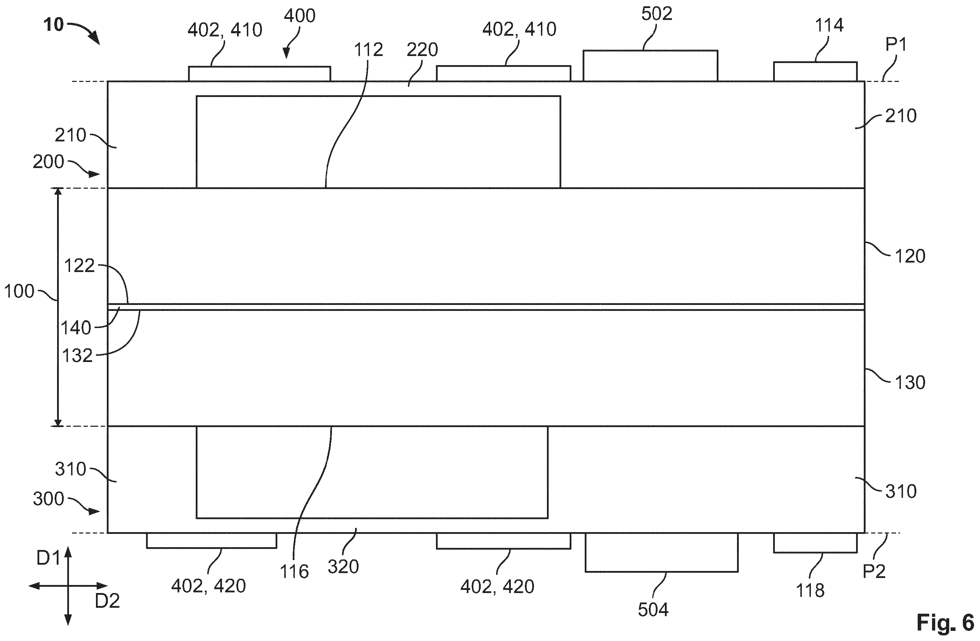

In the embodiment of Figure 6, at least one of the first supports 210 is sufficiently wide in the second direction D2 that the first integrated circuit 502 and the first contact 114 are disposed on a surface of the first die 200. The first integrated circuit 502 and the first contact 114 are aligned with the first support 120 in the first direction D1 and spaced apart from the first diaphragm 220 in the second direction D2. Likewise, at least one of the second supports 310 is sufficiently wide in the second direction D2 that the second integrated circuit 504 and the second contact 118 are disposed on a surface of the second die 300. The second integrated circuit 504 and the second contact 118 are aligned with the second support 310 in the first direction D1 and spaced apart from the second diaphragm 320 in the second direction D2.

In the embodiments of the sensor assembly 10 described above, splitting the piezoresistors 402 of the full-bridge pressure sensor 400 into the first subset 410 and the second subset 420 positioned on different diaphragms 220, 320 and attaching the dies 200, 300 having the diaphragms 220, 320 to the substrate 100 in a stacked orientation in the first direction D1 decreases the overall size or footprint of the sensor assembly 10. Combining the signals 540, 550 from the two subsets 410, 420 into the measured pressure 560 allows for the increased sensitivity and performance of a full-bridge pressure sensor 400 while significantly decreasing the necessary overall size of the sensor assembly 10, permitting greater accuracy of pressure measurements in size-restricted applications.

## Claims

1. A sensor assembly (10), comprising:
a substrate (100) having a first outer surface (112) and a second outer surface (116) opposite the first outer surface (112);
a first die (200) attached to the first outer surface (112) and having a first diaphragm (220);
a second die (300) attached to the second outer surface (116) and having a second diaphragm (320);
a full-bridge pressure sensor (400) including a plurality of piezoresistive elements (402), a first subset (410) of at least two of the plurality of piezoresistive elements (402) is disposed on or in the first diaphragm (220); and
an integrated circuit (500);
**characterized in that**
the full-bridge pressure sensor (400) includes a second subset (420) of at least two of the plurality of piezoresistive elements (402) disposed on or in the second diaphragm (320), the first subset (410) and the second subset (420) of the piezoresistive elements (402) are connected to the integrated circuit (500), the integrated circuit (500) is configured to receive a first signal (540) from the first subset (410) and a second signal (550) from the second subset (420), the integrated circuit (500) is configured to correct a signal error between the first signal (540) and the second signal (550) and to measure a pressure around the sensor assembly (10); and
the integrated circuit (500) is a first integrated circuit (502) disposed on the first outer surface (112) and further comprising a second integrated circuit (504) disposed on the second outer surface (116).

2. The sensor assembly (10) of claim 1, wherein the substrate (100) includes a first portion (120) and a second portion (130), the first portion (120) has the first outer surface (112) and a first inner surface (122) opposite the first outer surface (112), the second portion (130) has the second outer surface (116) and a second inner surface (132) opposite the second outer surface (116), the first inner surface (122) is bonded to the second inner surface (132).

3. The sensor assembly (10) of claim 1 or 2, wherein the first die (200) has a pair of first supports (210) attached to the first outer surface (112) and separating the first diaphragm (220) from the first outer surface (112), the first diaphragm (220) is deflectable toward the first outer surface (112), the second die (300) has a pair of second supports (310) attached to the second outer surface (116) and separating the second diaphragm (320) from the second outer surface (116), the second diaphragm (320) is deflectable toward the second outer surface (116).

4. The sensor assembly (10) of any preceding claim, wherein the second die (300) is mirror symmetrical to the first die (200) about the substrate (100), or the second die (300) is offset from the first die (200) in a direction parallel to the first outer surface (112) and the second outer surface (116).

5. The sensor assembly (10) of any preceding claim, wherein the substrate (100) has a via (150) extending through the substrate (100) from the first outer surface (112) to the second outer surface (116), the via (150) electrically connects the first subset (410) and the second subset (420) with the integrated circuit (500).

6. The sensor assembly (10) of any preceding claim, wherein the first outer surface (112) has a first contact (114) and the second outer surface (116) has a second contact (118), the integrated circuit (500) is electrically connected to the first subset (410) and the second subset (420) through the first contact (114) and the second contact (118).

7. The sensor assembly (10) of any preceding claim, wherein the first subset (410) is disposed on a side of the first diaphragm (220) facing the first outer surface (112) and/or the second subset (420) is disposed on a side of the second diaphragm (320) facing the second outer surface (116).

8. The sensor assembly (10) of any preceding claim, wherein first die (200) and the second die (300) are each a silicon material, the piezoresistive elements (402) are an elemental material patterned over or embedded into the silicon material of the first die (200) and the second die (300).

9. The sensor assembly (10) of any preceding claim, wherein the full-bridge pressure sensor (400) includes four piezoresistive elements (402), the first subset (410) is a first half-bridge of two piezoresistive elements on or in the first diaphragm (220) and the second subset (420) is a second half-bridge of two piezoresistive elements on or in the second diaphragm (320).

10. The sensor assembly (10) of any preceding claim, wherein the first subset (410) on or in the first diaphragm (220) lies in a first plane (P1) parallel to the first outer surface (112) and the second subset (420) on or in the second diaphragm (320) lies in a second plane (P2) parallel to the second outer surface (116), the first plane (P1) is separated from the second plane (P2).

## Patentansprüche

1. Sensoranordnung (10), die Folgendes umfasst:
ein Substrat (100) mit einer ersten Außenfläche (112) und einer zweiten Außenfläche (116) gegenüber der ersten Außenfläche (112);
einen ersten Chip (200), der an der ersten Außenfläche (112) angebracht ist und eine erste Membran (220) aufweist;
einen zweiten Chip (300), der an der zweiten Außenfläche (116) angebracht ist und eine zweite Membran (320) aufweist;
einen Vollbrücken-Drucksensor (400) mit mehreren piezoresistiven Elementen (402), wobei eine erste Teilmenge (410) von mindestens zwei der mehreren piezoresistiven Elemente (402) auf oder in der ersten Membran (220) angeordnet ist; und
eine integrierte Schaltung (500);
**dadurch gekennzeichnet, dass**
der Vollbrücken-Drucksensor (400) eine zweite Teilmenge (420) von mindestens zwei der mehreren piezoresistiven Elemente (402) umfasst, die auf oder in der zweiten Membran (320) angeordnet sind, die erste Teilmenge (410) und die zweite Teilmenge (420) der piezoresistiven Elemente (402) mit der integrierten Schaltung (500) verbunden sind, die integrierte Schaltung (500) zum Empfangen eines ersten Signals (540) von der ersten Teilmenge (410) und eines zweiten Signals (550) von der zweiten Teilmenge (420) konfiguriert ist, die integrierte Schaltung (500) zum Korrigieren eines Signalfehlers zwischen dem ersten Signal (540) und dem zweiten Signal (550) und zum Messen eines Drucks um die Sensoranordnung (10) konfiguriert ist; und
die integrierte Schaltung (500) eine auf der ersten Außenfläche (112) angeordnete erste integrierte Schaltung (502) ist und ferner eine auf der zweiten Außenfläche (116) angeordnete zweite integrierte Schaltung (504) umfasst.

2. Sensoranordnung (10) nach Anspruch 1, wobei das Substrat (100) einen ersten Abschnitt (120) und einen zweiten Abschnitt (130) aufweist, der erste Abschnitt (120) die erste Außenfläche (112) und eine erste Innenfläche (122) gegenüber der ersten Außenfläche (112) aufweist, der zweite Abschnitt (130) die zweite Außenfläche (116) und eine zweite Innenfläche (132) gegenüber der zweiten Außenfläche (116) aufweist, die erste Innenfläche (122) an die zweite Innenfläche (132) gebondet ist.

3. Sensoranordnung (10) nach Anspruch 1 oder 2, wobei der erste Chip (200) ein Paar erster Träger (210) aufweist, die an der ersten Außenfläche (112) angebracht sind und die erste Membran (220) von der ersten Außenfläche (112) trennen, die erste Membran (220) in Richtung der ersten Außenfläche (112) auslenkbar ist, der zweite Chip (300) ein Paar zweiter Träger (310) aufweist, die an der zweiten Außenfläche (116) angebracht sind und die zweite Membran (320) von der zweiten Außenfläche (116) trennen, die zweite Membran (320) in Richtung der zweiten Außenfläche (116) auslenkbar ist.

4. Sensoranordnung (10) nach einem vorherigen Anspruch, wobei der zweite Chip (300) spiegelsymmetrisch zum ersten Chip (200) um das Substrat (100) ist oder der zweite Chip (300) gegenüber dem ersten Chip (200) in einer Richtung parallel zur ersten Außenfläche (112) und zur zweiten Außenfläche (116) versetzt ist.

5. Sensoranordnung (10) nach einem vorherigen Anspruch, wobei das Substrat (100) eine Durchkontaktierung (150) aufweist, die sich durch das Substrat (100) von der ersten Außenfläche (112) zur zweiten Außenfläche (116) erstreckt, wobei die Durchkontaktierung (150) die erste Teilmenge (410) und die zweite Teilmenge (420) mit der integrierten Schaltung (500) elektrisch verbindet.

6. Sensoranordnung (10) nach einem vorherigen Anspruch, wobei die erste Außenfläche (112) einen ersten Kontakt (114) und die zweite Außenfläche (116) einen zweiten Kontakt (118) hat, die integrierte Schaltung (500) über den ersten Kontakt (114) und den zweiten Kontakt (118) elektrisch mit der ersten Teilmenge (410) und der zweiten Teilmenge (420) verbunden ist.

7. Sensoranordnung (10) nach einem vorherigen Anspruch, wobei die erste Teilmenge (410) auf einer der ersten Außenfläche (112) zugewandten Seite der ersten Membran (220) angeordnet ist und/oder die zweite Teilmenge (420) auf einer der zweiten Außenfläche (116) zugewandten Seite der zweiten Membran (320) angeordnet ist.

8. Sensoranordnung (10) nach einem vorherigen Anspruch, wobei der erste Chip (200) und der zweite Chip (300) jeweils aus einem Siliziummaterial bestehen und die piezoresistiven Elemente (402) ein Elementarmaterial sind, das über das Siliziummaterial des ersten Chips (200) und des zweiten Chips (300) strukturiert oder darin eingebettet ist.

9. Sensoranordnung (10) nach einem vorherigen Anspruch, wobei der Vollbrücken-Drucksensor (400) vier piezoresistive Elemente (402) beinhaltet, die erste Teilmenge (410) eine erste Halbbrücke aus zwei piezoresistiven Elementen auf oder in der ersten Membran (220) ist und die zweite Teilmenge (420) eine zweite Halbbrücke aus zwei piezoresistiven Elementen auf oder in der zweiten Membran (320) ist.

10. Sensoranordnung (10) nach einem vorherigen Anspruch, wobei die erste Teilmenge (410) auf oder in der ersten Membran (220) in einer ersten Ebene (P1) parallel zur ersten Außenfläche (112) liegt und die zweite Teilmenge (420) auf oder in der zweiten Membran (320) in einer zweiten Ebene (P2) parallel zur zweiten Außenfläche (116) liegt, wobei die erste Ebene (P1) von der zweiten Ebene (P2) getrennt ist.

## Revendications

1. Ensemble capteur (10), comprenant :
un substrat (100) ayant une première surface externe (112) et une deuxième surface externe (116) à l'opposé de la première surface externe (112) ;
un premier dé (200) attaché à la première surface externe (112) et ayant un premier diaphragme (220) ;
un deuxième dé (300) attaché à la deuxième surface externe (116) et ayant un deuxième diaphragme (320) ;
un capteur de pression en pont complet (400) incluant une pluralité d'éléments piézo-résistifs (402), un premier sous-ensemble (410) d'au moins deux éléments de la pluralité d'éléments piézo-résistifs (402) étant disposé sur ou dans le premier diaphragme (220) ; et
un circuit intégré (500) ;
**caractérisé en ce que**
le capteur de pression en pont complet (400) inclut un deuxième sous-ensemble (420) d'au moins deux éléments de la pluralité d'éléments piézo-résistifs (402) disposé sur ou dans le deuxième diaphragme (320), le premier sous-ensemble (410) et le deuxième sous-ensemble (420) d'éléments piézo-résistifs (402) étant connectés au circuit intégré (500), le circuit intégré (500) étant configuré pour recevoir un premier signal (540) en provenance du premier sous-ensemble (410) et un deuxième signal (550) en provenance du deuxième sous-ensemble (420), le circuit intégré (500) étant configuré pour corriger une erreur de signal entre le premier signal (540) et le deuxième signal (550) et pour mesurer une pression autour de l'ensemble capteur (10) ; et
le circuit intégré (500) est un premier circuit intégré (502) disposé sur la première surface externe (112) et comprenant en outre un deuxième circuit intégré (504) disposé sur la deuxième surface externe (116).

2. Ensemble capteur (10) de la revendication 1, dans lequel le substrat (100) inclut une première portion (120) et une deuxième portion (130), la première portion (120) présentant la première surface externe (112) et une première surface interne (122) à l'opposé de la première surface externe (112), la deuxième portion (130) présentant la deuxième surface externe (116) et une deuxième surface interne (132) à l'opposé de la deuxième surface externe (116), la première surface interne (122) étant liaisonnée à la deuxième surface interne (132).

3. Ensemble capteur (10) de la revendication 1 ou 2, dans lequel le premier dé (200) a une paire de premiers supports (210) qui sont attachés à la première surface externe (112) et séparant le premier diaphragme (220) de la première surface externe (112), le premier diaphragme (220) étant fléchissable vers la première surface externe (112), le deuxième dé (300) a une paire de deuxièmes supports (310) qui sont attachés à la deuxième surface externe (116) et séparant le deuxième diaphragme (320) de la deuxième surface externe (116), le deuxième diaphragme (320) étant fléchissable vers la deuxième surface externe (116).

4. Ensemble capteur (10) de n'importe quelle revendication précédente, dans lequel le deuxième dé (300) est symétrique en miroir par rapport au premier dé (200) autour du substrat (100), ou le deuxième dé (300) est décalé par rapport au premier dé (200) dans une direction qui est parallèle à la première surface externe (112) et à la deuxième surface externe (116).

5. Ensemble capteur (10) de n'importe quelle revendication précédente, dans lequel le substrat (100) a un trou traversant (150) qui s'étend à travers le substrat (100) à partir de la première surface externe (112) jusqu'à la deuxième surface externe (116), le trou traversant (150) connectant électriquement le premier sous-ensemble (410) et le deuxième sous-ensemble (420) avec le circuit intégré (500).

6. Ensemble capteur (10) de n'importe quelle revendication précédente, dans lequel la première surface externe (112) a un premier contact (114) et la deuxième surface externe (116) a un deuxième contact (118), le circuit intégré (500) étant connecté électriquement au premier sous-ensemble (410) et au deuxième sous-ensemble (420) par l'intermédiaire du premier contact (114) et du deuxième contact (118).

7. Ensemble capteur (10) de n'importe quelle revendication précédente, dans lequel le premier sous-ensemble (410) est disposé sur un côté du premier diaphragme (220) faisant face à la première surface externe (112) et/ou le deuxième sous-ensemble (420) est disposé sur un côté du deuxième diaphragme (320) faisant face à la deuxième surface externe (116).

8. Ensemble capteur (10) de n'importe quelle revendication précédente, dans lequel le premier dé (200) et le deuxième dé (300) sont chacun en une matière de silicium, les éléments piézo-résistifs (402) sont en une matière élémentaire formant des motifs sur ou incorporés dans la matière de silicium du premier dé (200) et du deuxième dé (300).

9. Ensemble capteur (10) de n'importe quelle revendication précédente, dans lequel le capteur en pont complet (400) inclut quatre éléments piézo-résistifs (402), le premier sous-ensemble (410) est un premier demi-pont de deux éléments piézo-résistifs sur ou dans le premier diaphragme (220) et le deuxième sous-ensemble (420) est un deuxième demi-pont de deux éléments piézo-résistifs sur ou dans le deuxième diaphragme (320).

10. Ensemble capteur (10) de n'importe quelle revendication précédente, dans lequel le premier sous-ensemble (410) sur ou dans le premier diaphragme (220) se trouve dans un premier plan (P1) qui est parallèle à la première surface externe (112) et le deuxième sous-ensemble (420) sur ou dans le deuxième diaphragme (320) se trouve dans un deuxième plan (P2) qui est parallèle à la deuxième surface externe (116), le premier plan (P1) étant séparé du deuxième plan (P2).
